# EUROPEAN PATENT APPLICATION

(11) **EP 1 542 393 A1**
(43) Date of publication of application: **15.06.2005**
(21) Application number: 03293104.0
(22) Date of filing: 10.12.2003
(51) Int. Cl.: H04L 12/18, H04L 12/56, H04Q 7/22, H04Q 7/30

(54) **Method for transmitting multicast data**

(71) Applicant: ALCATEL, 75008 Paris (FR)
(72) Inventor: Gomez Vinagre, Ignacio, 2000 Antwerp (BE)
(74) Representative: Plas, Axel

(57) **Abstract**

Methods for transmitting multicast data information from a support node (1) to a terminal (6) exchange signalling information (31-33) between the support nodes (1) and the terminal (6) via at least a part of a controller system comprising a serving controller (3) and a controlling controller (2) and transmit the multicast data information from the support node (1) to the terminal (6) via the controlling controller (2), as long as the terminal (6) is in a point-to-multipoint mode. As soon as the terminal (6) goes from point-to-multipoint mode to point-to-point mode, the terminal (6) then receives the multicast data information from the support node (1) via the serving controller (3) and via the controlling controller (2). To reduce the traffic between both controllers (2,3), a medium access control (21) is performed on the multicast data information (10) in the controlling controller (2) for the terminal (6) being in the point-to-point mode. As a result, the multicast data information (10) no longer needs to be exchanged via the serving controller (3).

## Description

The invention relates to a method for transmitting multicast data information from a support node to a terminal being in a point-to-point mode or in a point-to-multipoint mode, which method comprises the steps of
- exchanging signalling information between the support node and the terminal via at least a part of a controller system comprising a serving controller and a controlling controller; and
- transmitting the multicast data information from the support node to the terminal via at least one controller.

Such a support node for example corresponds with a service general packet radio system support node, such a terminal for example corresponds with a mobile terminal in a general packet radio system or a universal mobile telecommunication system, such a serving controller for example corresponds with a serving radio network controller and such a controlling controller for example corresponds with a controlling radio network controller.

A prior art method is of common general knowledge. Usually, when transmitting multicast data information, like for example multimedia broadcast multicast service information (like for example weather information, traffic information, a movie etc.), those terminals which are in a point-to-multipoint mode and which are located in a cell which is in a point-to-multipoint mode exchange signalling information with a support node via a serving controller and a controlling controller. So, the support node exchanges the signalling information with the serving controller, the serving controller with the controlling controller, and the controlling controller with the terminals, whereby further nodes and/or interfaces may be located in between and whereby the serving controller and the controlling controller may be situated in the same physical node. These terminals which are in a point-to-multipoint mode receive the multicast data information from the support node via the controlling controller, without the serving controller being involved.

As soon as the cell goes from point-to-multipoint mode to point-to-point mode, all terminals in this cell go from point-to-multipoint mode to point-to-point mode. The terminals which are in a point-to-point mode still exchange the signalling information the same way as described before (this signalling information has for example instructed the terminal to change its mode). But these terminals which are in a point-to-point mode now receive the multicast data information in a different way as described before. The terminals which are in a point-to-point mode receive the multicast data information from the support node via the controlling controller and the serving controller. So, the support node transmits the multicast data information to the serving controller, the serving controller to the controlling controller, and the controlling controller to the terminal, whereby further nodes and/or interfaces may be located in between and whereby the serving controller and the controlling controller may be situated in the same physical node.

The known method is disadvantageous, inter alia, due to relatively much multicast data information traffic being transmitted from serving controller to controlling controller for all terminals in a cell in case of the terminals in this cell being in a point-to-point mode. The limited capacity of an interface situated between the serving controller and the controlling controller is then used relatively inefficiently.

It is an object of the invention, inter alia, to provide a method as defined in the preamble whereby less multicast data information traffic is transmitted from the serving controller to the controlling controller for all terminals in a cell in case of the terminals in this cell being in a point-to-point mode.

The method according to the invention is characterised in that the method further comprises the step of
- performing a medium access control on the multicast data information in the controlling controller for the terminal being in a point-to-point mode.

By introducing a medium access control on the multicast data information for those terminals which are in a point-to-point mode, the multicast data information no longer needs to be exchanged via the serving controller, but can be transmitted from the support node to the controlling controller and from the controlling controller to the terminals. The medium access control allows the multicast data information to be transmitted to the terminals in the point-to-point mode independently from the signalling information. As a result, less multicast data information traffic up to zero multicast data information traffic needs to be exchanged between the serving controller and the controlling controller.

For the point-to-multipoint situation, a control plane (for dealing with the signalling information) and a user plane (for dealing with the multicast data information) were already separated from each other. The introduction of the medium access control allows the splitting of both planes also in the point-to-point situation.

Instead of saying that the terminal is in a point-to-point mode or in a point-to-multipoint mode, one could alternatively say that the terminal comprises a point-to-point mode and a point-to-multipoint mode, or that the terminal comprises a point-to-point mode / point-to-multipoint mode. Of course, the terminal can only be in one of both modes at a time, and further modes are not to be excluded.

An embodiment of the method according to the invention is characterised in that the method further comprises the step of
- mapping the multicast data information onto a channel via the medium access control.

By introducing a mapping of the multicast data information onto a channel via the medium access control, the multicast data information and the signalling information are sent to the terminal via either different physical channels or one or more non-different physical channels.

An embodiment of the method according to the invention is characterised in that the medium access control is generated in the controlling controller.

By applying a (new) medium access control, the multicast data information and the signalling information are sent to the terminal in a multiplexed way via different physical channels, with the terminal demodulating these physical channels.

An embodiment of the method according to the invention is characterised in that the medium access control is a copy of a medium access control generated in the serving controller.

By applying a copy of a(n) (old) medium access control already used by the serving controller, the multicast data information and the signalling information are sent to the terminal in a multiplexed way via one or more non-different physical channels, with the terminal demodulating these physical channels.

The invention also relates to a controlling controller for use in (combination with) a method for transmitting multicast data information from a support node to a terminal being in a point-to-point mode or in a point-to-multipoint mode, which method comprises the steps of
- exchanging signalling information between the support node and the terminal via at least a part of a controller system comprising a serving controller and the controlling controller; and
- transmitting the multicast data information from the support node to the terminal via at least one controller.

The controlling controller according to the invention is characterised in that the controlling controller comprises
- a medium access controller for controlling the multicast data information for the terminal being in a point-to-point mode.

An embodiment of the controlling controller according to the invention is characterised in that the controlling controller further comprises
- a mapper for mapping the multicast data information onto a channel via the medium access controller.

An embodiment of the controlling controller according to the invention is characterised in that the medium access control is generated in the controlling controller.

An embodiment of the controlling controller according to the invention is characterised in that the medium access control is a copy of a medium access control generated in the serving controller.

The invention further relates to a medium access controller for use in (combination with) a method for transmitting multicast data information from a support node to a terminal being in a point-to-point mode or in a point-to-multipoint mode, which method comprises the steps of
- exchanging signalling information between the support node and the terminal via at least a part of a controller system comprising a serving controller and a controlling controller; and
- transmitting the multicast data information from the support node to the terminal via at least one controller.

The medium access controller according to the invention is characterised in that the medium access controller is arranged to form part of the controlling controller for controlling the multicast data information for the terminal being in a point-to-point mode.

The invention yet further relates to a processor program product for use in (combination with) a method for transmitting multicast data information from a support node to a terminal being in a point-to-point mode or in a point-to-multipoint mode, which method comprises the steps of
- exchanging signalling information between the support node and the terminal via at least a part of a controller system comprising a serving controller and a controlling controller; and
- transmitting the multicast data information from the support node to the terminal via at least one controller.

The processor program product according to the invention comprises the function of
- performing a medium access control on the multicast data information in the controlling controller for the terminal being in a point-to-point mode.

Embodiments of the medium access controller according to the invention and of the processor program product according to the invention correspond with the embodiments of the method according to the invention and/or of the controlling controller according to the invention.

The invention is based upon an insight, inter alia, that multicast data information traffic flowing from the serving controller to the controlling controller via the serving controller is routed inefficiently for all terminals in a cell in case of the terminals in this cell being in a point-to-point mode, and is based upon a basic idea, inter alia, that the multicast data information traffic can be routed more efficiently from the serving controller to the controlling controller without the serving controller being involved by introducing the medium access control in the controlling controller.

The invention solves the problem, inter alia, to provide a method as defined in the preamble whereby less multicast data information traffic is transmitted from the serving controller to the controlling controller for all terminals in a cell in case of the terminals in this cell being in a point-to-point mode, and is advantageous, inter alia, in that less multicast data information traffic up to zero multicast data information traffic needs to be exchanged between the serving controller and the controlling controller. Further, the number of different operations for point-to-point modes and point-to-multipoint modes is reduced. Other advantages are that the solution is backward compatible, which means that normal packet switched and circuit switched calls can be carried out normally, and that radio network controllers only need to register at the distribution multicast tree if forming part of the service areas (with reference to the distribution multicast tree the situation today is that the radio network controller that controls users receiving multimedia broadcast multicast service data need to register with their service general packet radio system support node and request the multimedia broadcast multicast service radio access bearer. The problem that the terminal is in a point-to-point mode in an area where a certain multimedia broadcast multicast service is offered and that the terminal gets the data from a serving radio network controller that doesn't control any cells belonging to the multimedia broadcast multicast service area is solved).

These and other aspects of the invention will be apparent from and elucidated with reference to the embodiments(s) described hereinafter.
Fig. 1 shows in block diagram form a prior art method and a prior art system for (1A) a point-to-multipoint situation and shows in block diagram form a prior art method and a prior art system for (1B) a point-to-point situation;
Fig. 2 shows in block diagram form a prior art method and a prior art system for (2A) a point-to-multipoint situation and shows in block diagram form a method according to the invention and a system according to the invention for (2B) a point-to-point situation;
Fig. 3 shows in block diagram form a method according to the invention and a system according to the invention comprising a controlling controller according to the invention in greater detail for a point-to-point situation;
Fig. 4 shows in block diagram form a further method according to the invention and a further system according to the invention comprising a further controlling controller according to the invention in greater detail for a point-to-point situation; and
Fig. 5 shows in block diagram form a general controlling controller according to the invention.

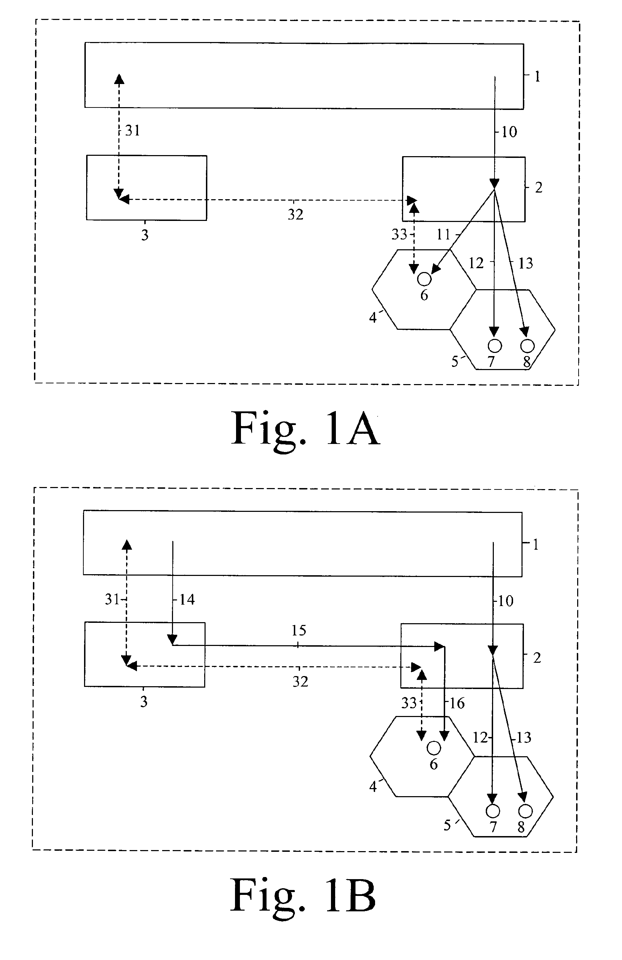

The prior art way for transmitting multicast data information from a support node to terminals is shown in Fig. 1, which discloses a support node 1, a controlling controller 2, a serving controller 3, a first terminal 6 located in a first cell 4 and a second terminal 7 and a third terminal 8 located in a second cell 5. The support node 1, like for example a service general packet radio system support node, is coupled to the controlling controller 2, like for example a controlling radio network controller, and to the serving controller 3, like for example a serving radio network controller. The terminals 6, 7 and 8 for example correspond with mobile terminals in a general packet radio system or a universal mobile telecommunication system.

In Fig. 1A (prior art), all terminals 6, 7 and 8 are in a point-to-multipoint mode. When transmitting multicast data information 10,11, like for example multimedia broadcast multicast service information (like for example weather information, traffic information, a movie etc.), from the support node 1 to the terminal 6, the terminal 6 needs to exchange signalling information 31-33 with the support node 1 via for example the serving controller 3 and the controlling controller 2, whereby further nodes and/or interfaces may be located in between and whereby the serving controller 3 and the controlling controller 2 may be situated in the same physical node. The terminal 6 which is in a point-to-multipoint mode receives the multicast data information 10,11 from the support node 1 via the controlling controller 2, without the serving controller 3 being involved. The same way, the terminals 7 and 8 which are in a point-to-multipoint mode receive the multicast data information 10, 12 and 13 from the support node 1 via the controlling controller 2, again without the serving controller 3 being involved.

In Fig. 1B (prior art), the terminal 6 is gone into a point-to-point mode, because the cell 4 has gone into a point-to-point mode. The terminals 7 and 8 are still in a point-to-multipoint mode, because the cell 5 is still in a point-to-multipoint mode. The terminal 6 which now is in a point-to-point mode still exchanges the signalling information 31-33 the same prior art way as described before (in fact, this signalling information for example instructs the terminal to change its mode). This terminal 6 which is in a point-to-point mode now however receives the multicast data information 14-16 in a different way as described before (still a prior art way). The terminal 6 which is in a point-to-point mode receives the multicast data information 14-16 from the support node 1 via the controlling controller 2 and the serving controller 3. So, the support node 1 transmits the multicast data information 14 to the serving controller 3, the serving controller 3 transmits the multicast data information 15 to the controlling controller 2, and the controlling controller 2 transmits the multicast data information 16 to the terminal 6, whereby further nodes and/or interfaces may be located in between and whereby the serving controller 3 and the controlling controller 2 may be situated in the same physical node. The terminals 7 and 8 are not located in cell 4 but in the other cell 5 and can therefore remain in a point-to-multipoint mode. These terminals 7 and 8 receive the multicast data information 10, 12 and 13 the same prior art way as described for Fig. 1A.

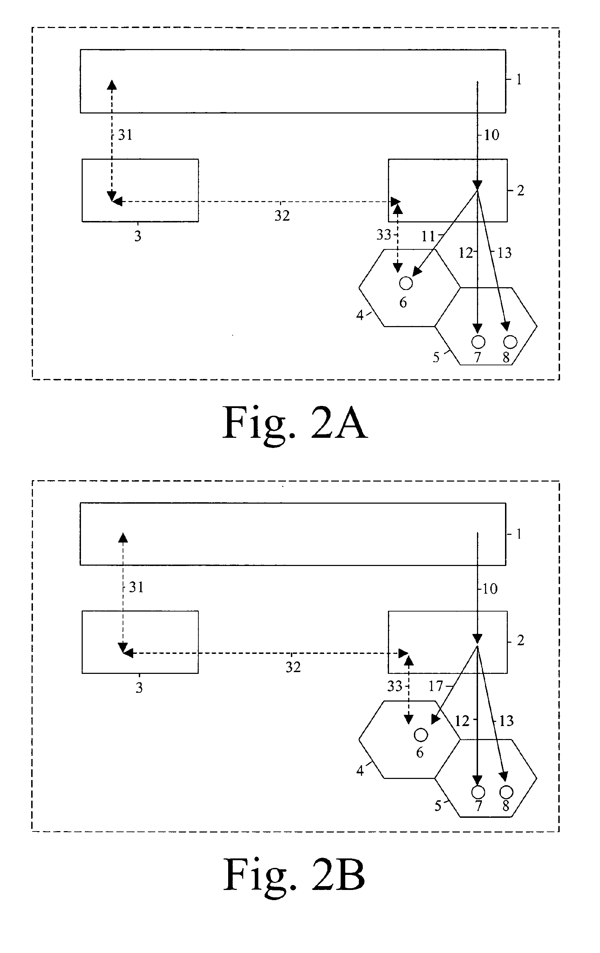

In Fig. 2A (prior art), which corresponds with Fig. 1A, all terminals 6, 7 and 8 are in a point-to-multipoint mode, and the signalling information 31-33 and the multicast data information 10-13 are exchanged the same prior art way as described for Fig. 1A.

In Fig. 2B (invention), the terminal 6 is gone into a point-to-point mode, with the terminals 7 and 8 still being in a point-to-multipoint mode. The terminal 6 which now is in a point-to-point mode still exchanges the signalling information 31-33 the same prior art way as described before. This terminal 6 which is in a point-to-point mode now however receives the multicast data information 10,17 in a new and inventive way (and according to the invention, to reduce the multicast data information traffic between the serving controller 2 and the controlling controller 3). The terminal 6 which is in a point-to-point mode receives the multicast data information 10,17 from the support node 1 via the controlling controller 2 without the serving controller 3 being involved. So, the support node 1 transmits the multicast data information 10 to the controlling controller 2, and the controlling controller 2 transmits the multicast data information 17 to the terminal 6, whereby further nodes and/or interfaces may be located in between and whereby the serving controller 3 and the controlling controller 2 may be situated in the same physical node. The terminals 7 and 8 are not located in cell 4 but in the other cell 5 and can therefore remain in a point-to-multipoint mode. These terminals 7 and 8 receive the multicast data information 10, 12 and 13 the same prior art way as described for Fig. 1A.

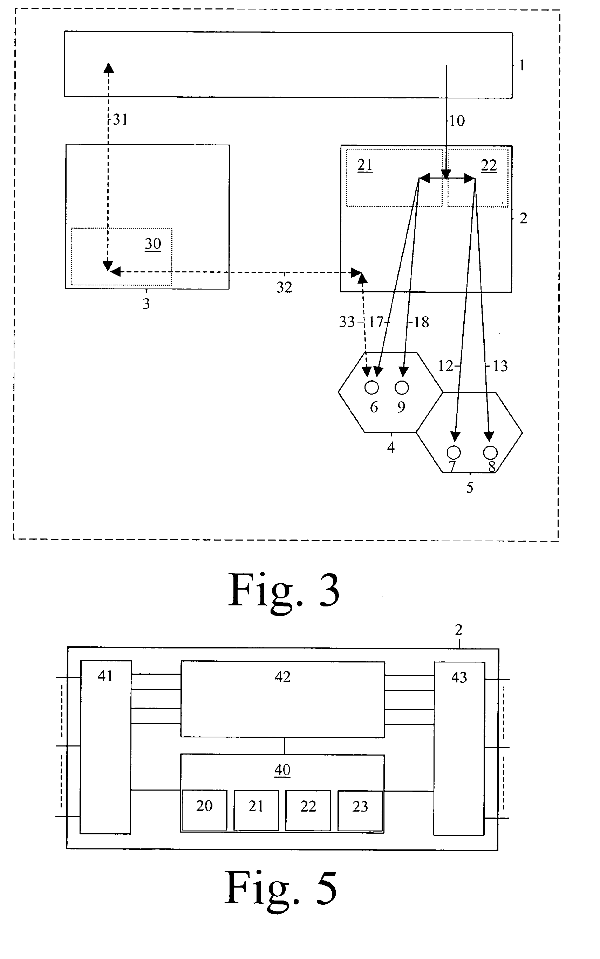

As a result, less multicast data information traffic up to zero multicast data information traffic needs to be exchanged between the serving controller 3 and the controlling controller 2. This has been made possible introducing a medium access control in the controlling controller 2 on the multicast data information for those terminals which are in a point-to-point mode. The medium access control allows the multicast data information to be transmitted to the terminals in the point-to-point mode independently from the signalling information. A medium access controller is shown as a small part of Fig. 3, 4 and 5.

Fig. 3 (invention) corresponds with Fig. 2B, apart from the serving controller 3 comprising a medium access controller 30, apart from the controlling controller 2 comprising two medium access controllers 21-22, and apart from a fourth terminal 9 being present in cell 4 receiving the multicast data information 18 from the controlling controller 2. Both terminals 6 and 9 are in a point-to-point mode, and the terminals 7 and 8 are in a point-to-multipoint mode. The terminal 6 still exchanges the signalling information 31-33 the same way as described before. The signalling information 31,32 is controlled by the medium access controller 30 in a prior art way. Possibly, the signalling information 32,33 may be controlled by a medium access controller 20 not shown in Fig. 3 in the controlling controller 2 for the sake of clarity. This terminal 6 receives the multicast data information 10,17 the same new and inventive way as described before for Fig. 2B. The multicast data information 17 is controlled by the medium access controller 21 and the multicast data information 10,17 is controlled by at least one of the medium access controllers 21 and 22. For terminal 9, the multicast data information 18 is controlled by the medium access controller 21. The terminals 7 and 8 are not located in cell 4 but in the other cell 5 and can therefore remain in a point-to-multipoint mode. These terminals 7 and 8 receive the multicast data information 10, 12 and 13 the same prior art way as described for Fig. 1A, which multicast data information 10, 12 and 13 is controlled by the medium access controller 22.

In Fig. 3 (invention), the medium access controller 21 either is a new medium access controller generated in the controlling controller 2 via a generator not shown, or the medium access controller 21 is a copy of a(n) (old) medium access controller generated in the serving controller 3, to be exchanged via a transmitter in the serving controller 3 and a receiver in the controlling controller 2 both not shown.

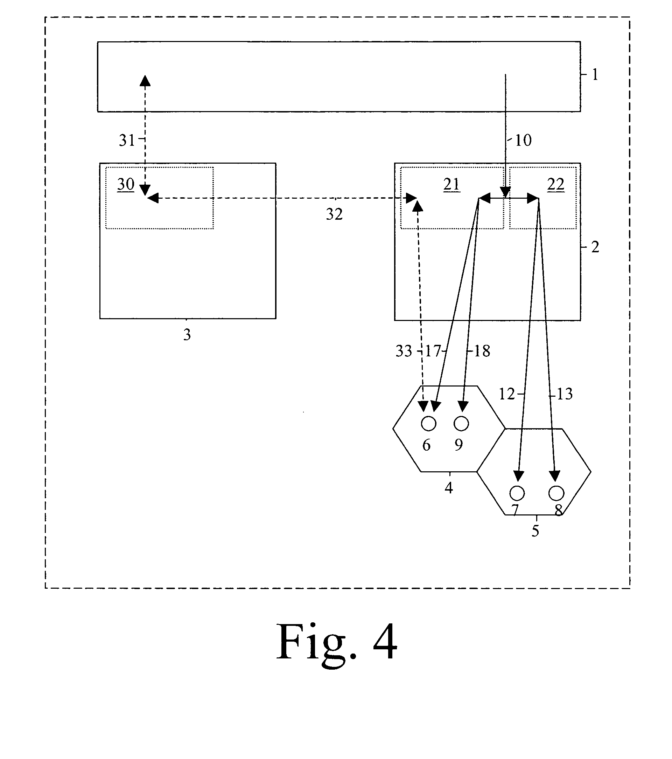

Fig. 4 (invention) corresponds with Fig. 3, apart from the signalling information 32,33 now also further being controlled by the medium access controller 21. Thereby, again, the medium access controller 21 either is a new medium access controller generated in the controlling controller 2, or the medium access controller 21 is a copy of a medium access controller generated in the serving controller 3.

Fig. 5 (invention) shows a general controlling controller according to the invention, like for example controlling controller 2 shown in Fig. 3,4. Controlling controller 2 comprises a processor 40, a first in/output interface 41, a coupler 42 and a second in/output interface 43. Both interfaces 41,43 are coupled to each other via the coupler 43, which allows signalling information and multicast data information and further information to be switched, possible via buffers not shown. The processor 40 controls both interfaces 41,43 and coupler 42, and comprises a medium access controllers 20 discussed hereafter and the medium access controllers 21-22 discussed before and a mapper 23 for mapping the multicast data information 10,17 onto a channel via the medium access controller 21. Further mappers and controllers are not to be excluded. The medium access controller 20 is for example used to convey data on common channels and when a dedicated logical connection is carried on a common transport channel (different levels in the protocol stack) the data passes from the dedicated medium access controller to the terminal through the common medium access controller.

The signalling information 31-33 is exchanged via logical connections, and, for the sake of clarity, only shown for terminal 6. The multicast data information 10-13 is exchanged via common channels. The multicast data information 14-18 is exchanged via dedicated channels.

The expression "for" in for example "for controlling" and "for mapping" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps of exchanging signalling information and of transmitting multicast data information and of performing a medium access control and of mapping do not exclude further steps, like for example, inter alia, the steps described for Fig. 2B, 3, 4 and 5 etc.

## Claims

1. Method for transmitting multicast data information (10-18) from a support node (1) to a terminal (6) being in a point-to-point mode or in a point-to-multipoint mode, which method comprises the steps of
- exchanging signalling information (31-33) between the support node (1) and the terminal (6) via at least a part of a controller system comprising a serving controller (3) and a controlling controller (2); and
- transmitting the multicast data information (10-18) from the support node (1) to the terminal (6) via at least one controller (2,3);
**characterised in that** the method further comprises the step of
- performing a medium access control (21) on the multicast data information (10) in the controlling controller (2) for the terminal (6) being in a point-to-point mode.

2. Method as defined in claim 1, **characterised in that** the method further comprises the step of
- mapping (23) the multicast data information (10,17) onto a channel via the medium access control (21).

3. Method as defined in claim 2, **characterised in that** the medium access control (21) is generated in the controlling controller (2).

4. Method as defined in claim 2, **characterised in that** the medium access control (21) is a copy of a medium access control generated in the serving controller (3).

5. Controlling controller (2) for use in a method for transmitting multicast data information (10-18) from a support node (1) to a terminal (6) being in a point-to-point mode or in a point-to-multipoint mode, which method comprises the steps of
- exchanging signalling information (31-33) between the support node (1) and the terminal (6) via at least a part of a controller system comprising a serving controller (3) and the controlling controller (2); and
- transmitting the multicast data information (10-18) from the support node (1) to the terminal (6) via at least one controller (2,3);
**characterised in that** the controlling controller (2) comprises
- a medium access controller (21) for controlling the multicast data information (10) for the terminal (6) being in a point-to-point mode.

6. Controlling controller (2) as defined in claim 5, **characterised in that** the controlling controller (2) further comprises
- a mapper (23) for mapping the multicast data information (10,17) onto a channel via the medium access controller (21).

7. Controlling controller (2) as defined in claim 6, **characterised in that** the medium access controller (21) is generated in the controlling controller (2).

8. Controlling controller (2) as defined in claim 6, **characterised in that** the medium access controller (21) is a copy of a medium access control generated in the serving controller (3).

9. Medium access controller (21) for use in a method for transmitting multicast data information (10-18) from a support node (1) to a terminal (6) being in a point-to-point mode or in a point-to-multipoint mode, which method comprises the steps of
- exchanging signalling information (31-33) between the support node (1) and the terminal (6) via at least a part of a controller system comprising a serving controller (3) and a controlling controller (2); and
- transmitting the multicast data information (10-18) from the support node (1) to the terminal (6) via at least one controller (2,3);
**characterised in that** the medium access controller (21) is arranged to form part of the controlling controller (2) for controlling the multicast data information (10) for the terminal (6) being in a point-to-point mode.

10. Processor program product for use in a method for transmitting multicast data information (10-18) from a support node (1) to a terminal (6) being in a point-to-point mode or in a point-to-multipoint mode, which method comprises the steps of
- exchanging signalling information (31-33) between the support node (1) and the terminal (6) via at least a part of a controller system comprising a serving controller (3) and a controlling controller (2); and
- transmitting the multicast data information (10-18) from the support node (1) to the terminal (6) via at least one controller (2,3);
**characterised in that** the processor program product comprises the function of
- performing a medium access control (21) on the multicast data information (10) in the controlling controller (2) for the terminal (6) being in a point-to-point mode.
